# EUROPEAN PATENT APPLICATION

(11) **EP 0 952 755 A2**
(43) Date of publication of application: **27.10.1999**
(21) Application number: 99250096.7
(22) Date of filing: 27.03.1999
(51) Int. Cl.: H04Q 11/04, H04L 12/46

(54) **Virtual private network forming system and method**

(30) Priority: 27.03.1998 JP 8094798
(71) Applicant: NEC CORPORATION, Tokyo (JP)
(72) Inventor: Yamano, Shigeki, Minato-ku, Tokyo (JP)
(74) Representative: Patentanwälte Wenzel & Kalkoff

(57) **Abstract**

In a network system composed of an ATM network (10) and a plurality of frame relay networks (11-13, a first VPN-capable edge device (101-103) transfers a packet to a second VPN-capable edge device (101-103) through a virtual channel connection (VCC) of a virtual private network (VPN), wherein the packet is received from a user router (105-107) belonging to the VPN and the virtual channel connection is determined depending on a layer-3 destination address of the packet and a VPN identifier assigned to the VPN.

## Description

### BACKGROUND OF THE INVENTION

The present invention generally relates to a network system forming a virtual private network (VPN), and in particular to system and method which form the virtual private network over an ATM (Asynchronous Transfer Mode) network connected to frame-relay (FR) networks for the purpose of transferring packets.

In a dedicated circuit private network that traditionally has been comprised of dedicated circuits, it is not easy to change in network configuration because a change of bandwidth could lead to a change of provisioning. To improve network flexibility, there has been proposed and used a virtual private network (VPN) that is virtually formed by setting up a plurality of virtual channel connections on a physical channel using ATM network or FR (frame relay) network interface.

In the case of a system composed of an ATM network connected to a plurality of FR networks through Layer-2 switches, each Layer-2 switch has the functions of: setting up a virtual channel connection on the FR and ATM networks; converting between ATM cells and FR frames; and holding a relationship between virtual channel connections on the FR network and on the ATM network. Further, each user router connected to a FR network has the functions of routing and forwarding Layer-3 packets. In such a system, a desired virtual private network can be formed through a link establishment phase and a data transfer phase.

Although it is not a VPN forming system, there has been disclosed a packet transfer system between ATM network and FR network where shortcut paths have been established between ATM multi-layer (ML) switches in a publication titled "MPOA for point-to-point access links" (ATM Forum 98-0112, February 1998). In this system composed of MPOA servers and MPOA ML switches (MPOA clients) via which the ATM network and the FR network are connected, a shortcut path (hereinafter, called a shortcut virtual channel connection (VCC)) is established between MPOA ML switches without passing an MPOA server to transfer packets over ATM network.

The MPOA ML switch is mainly composed of ATM cell transceiver, FR frame transceiver, MPOA Layer-3 packet distributor, MPOA address resolution function section, MPOA FR-network destination information administration cache table (CT), MPOA ATM-network destination information administration cache table, and MPOA VCC setup section.

The MPOA server is mainly composed of ATM cell transceiver, Layer-3 packet distributor, MPOA trigger function section, Layer-3 packet routing processor, MPOA address resolution function section, and routing table.

Such an MPOA system has a default route transfer phase, an address resolution phase, and a shortcut data transfer phase. More specifically, in the default route transfer phase, each MPOA ML switch transfers all packets received from user routers to the MPOA server. The MPOA ML switch produces an entry having a key consisting of destination address of the received packet, the prefix length and ATM address of the MPOA server and retains it on a. Each time a packet having the same key is received, a pocket counter is incremented. Since the pocket counter is reset at regular intervals, the count of the packet counter represents the amount of transfer data for a constant time period. When the packet counter exceeds a predetermined threshold, the MPOA ML switch starts the address resolution phase.

Alternatively, the MPOA server has an option which performs the address resolution processing by sending a trigger message to the MPOA ML switch regardless of the packet counter.

In the address resolution phase, the MPOA ML switch transmits an address resolution request message to the MPOA server, which in turn transmits an ATM destination administration entry creation request message to an MPOA ML switch which is an opposite side of the originating MPOA ML switch. Then, an ATM destination administration entry creation response message is sent back to the MPOA server, which in turn transmits an address resolution response message back to the originating MPOA ML switch. In this manner, a shortcut VCC corresponding to the entry exceeding the packet counter threshold is established between the MPOA ML switches. The packets having the corresponding destination address are transferred through the shortcut VCC without passing the MPOA server. In other words, such a packet is handled in the shortcut data transfer phase.

However, the conventional VPN forming system has several disadvantages. First, as the number of user routers increases, the number of links to each user router also increases. Therefore, the increased number of user routers causes the increased efforts for provisioning to be needed when the VPN is initially formed or the network configuration is changed.

Further, the MPOA system determines to which shortcut VCC a packet is transmitted only for destination address information of the packet. Therefore, the MPOA system cannot identify a VPN. Furthermore, the MPOA system has no means for informing bandwidth information required for a shortcut VCCC. Therefore, the MPOA system cannot ensure the bandwidth of a link, that is, QoS (Quality of Service) guarantees in the VPN.

### SUMMARY OF THE INVENTION

An object of the present invention is to provide a virtual private network forming system and method which can achieve simplified provisioning for user routers without spoiling the ensured bandwidth of a Link in a VPN over ATM network.

According to the present invention, a network system is composed of an ATM network and a plurality of frame relay networks each including at least one user router, wherein at least one virtual private network (VPN) is set up over the network system. The network system is comprised of a VPN server provided in the ATM network, and a plurality of VPN-capable edge devices each connecting the ATM network to one of the frame relay networks. A first VPN-capable edge device transfers a packet to a second VPN-capable edge device through a virtual channel connection (VCC) of the VPN, wherein the packet is received from a user router belonging to the VPN and the virtual channel is determined depending on a layer-3 destination address of the packet and a VPN identifier assigned to the VPN.

The VPN-capable switch uses the layer-3 destination address of the packet and the VPN identifier as a key to transfer the packet through the virtual channel. Therefore, it is not necessary for a user router on the frame relay network to set up a plurality of virtual channels for the VPN.

Further, the VPN-capable switch may set up the virtual channel having a bandwidth (quality of service) required by the user when the VPN is formed Therefore, the amount of provisioning on each user router required for VPN formation can be dramatically reduced. Further, bandwidth guarantees can be obtained on VPN.

Other and further objects and advantages of the present invention will be apparent from the following description and claims and are illustrated in the accompanying drawings which schematically show preferred embodiments of the present invention. In the drawings
Fig. 1 is a schematic diagram showing a network configuration of a virtual private network formed over an ATM network connected to FR networks according to the present invention;

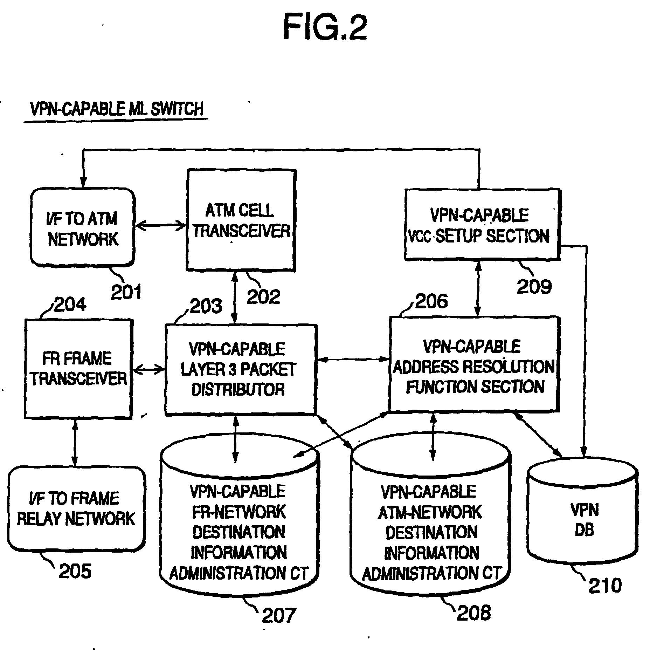

Fig. 2 is a block diagram showing the circuit configuration of a VPN-capable multi-layer (ML) switch according to a first embodiment of the present invention;
Fig. 3 is a block diagram showing the circuit configuration of a VPN server according to the first embodiment of the present invention;
Fig. 4 is a schematic diagram showing the format of a VPN-capable ATM-network destination information administration cache table as shown in Fig. 2;
Fig. 5 is a schematic diagram showing an example of the format of a VPN-capable FR-network destination information administration cache table as shown in Fig. 2;
Fig. 6 is a schematic diagram showing another example of the format of a VPN-capable FR-network destination information administration cache table as shown in Fig. 2;
Fig. 7 is a sequence diagram showing an example of the VPN establishment phase in the first embodiment;
Fig. 8 is a sequence diagram showing another example of the VPN establishment phase in the first embodiment;
Fig. 9 is a sequence diagram showing an example of the router creation/change trigger operation in the first embodiment;
Fig. 10 is a sequence diagram shoving an example of the address resolution phase in the first embodiment; and
Fig. 11 is a sequence diagram shoving an example of the data transfer phase in the first embodiment.

### DESCRIPTION OF THE PREFERRED EMBODIMENTS

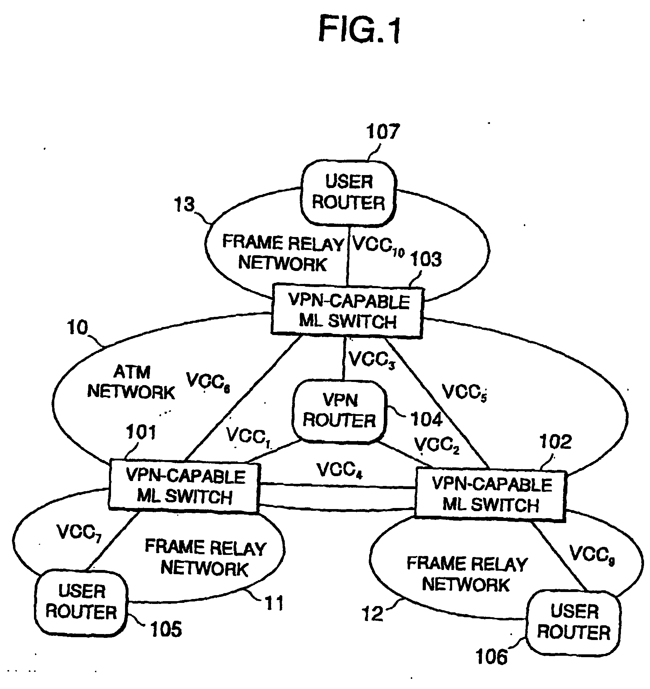

Referring to Fig. 1, it is assumed for simplicity that a system is composed of an ATM network 10 and a plurality of FR networks 11-13. On the system, a virtual private network is formed according to the embodiment of the present invention.

The FR networks 11-13 are connected to the ATM network 10 through VPN-capable ML switches 101-103, respectively. Virtual channel connections VCC₁-VCC₃ are established between the VPN-capable ML switches 101-103 and a VPN server 104, respectively. Shortcut virtual channel connections VCC₄-VCC₆ are established between the VPN-capable ML switches 101 and 102, between the VPN-capable ML switches 102 and 103, and between the VPN-capable ML switches 103 and 101, respectively. As described before, a shortcut VCC directly connects two VPN-capable ML switches without the intervention of the VPN server 104.

A packet transfer path between a user router 105 and the VPN server 104 is established by a virtual channel connection VCC₇ on the FR network 11 and the virtual channel connection VCC₁ on the ATM network 10. A packet transfer path between a user router 106 and the VPN server 104 is established by a virtual channel connection VCC₉ on the FR network 12 and the virtual channel connection VCC₂ on the ATM network 10. A packet transfer path between a user router 107 and the VPN server 104 is established by a virtual channel connection VCC₁₀ on the FR network 13 and the virtual channel connection VCC₃ on the ATM network 10.

The user routers 105-107 each have the routing function of determining a node destination to which a Layer-3 packet is forwarded next and a forwarding function of forwarding the packet to the determined node.

The VPN-capable ML switches 101-103 and the VPN server 104 according to the first embodiment operate in the following phases: 1) VPN establishment phase; 2) address resolution phase; and 3) VPN data transfer phase.

The details of the VPN-capable ML switches 101-103 and the VPN server 104 will be described hereinafter.

### VPN-CAPABLE ML SWITCH

Each of the VPN-capable ML switches 101-103 has the following functions: 1) VCC establishment between FR network and ATM network: 2) conversion between FR frames used in VCC on the FR network and ATM cells used in VCC on the ATM network; 3) retaining relationship between VCC on the FR network and VCC on the ATM network; 4) address resolution for mapping Layer-3 destination address to ATM address for each VPN; 5) retaining relationship between the Layer-3 destination address and the ATM address for each VPN; 6) per-VPN shortcut VCC establishment between VPN-capable ML switches using the resolved ATM address; 7) transfer to the shortcut VCC relevant packets among packets transferred from a user router to a VPN server; 8) transfer packets received through the shortcut VCC to the FR network; 9) FR frame conversion required to transfer a packet from the shortcut VCC to the FR network; 10) retaining information associated with exiting the ATM network and entering the FR network; and 11) retaining VPN information notified by the VPN server.

Each of the VPN-capable ML switches 101-103 is composed of an ATM-network interface 201 to the ATM network 10 The ATM-network interface 201 is connected to an ATM cell transceiver 202 which is capable of establishing a virtual channel and further transmits and receives ATM cells to and from the ATM network 10. A VPN-capable Layer-3 packet distributor 203 is connected to an FR frame transceiver 204 which is capable of establishing a virtual channel and further transmits and receives FR frames to and from the FR network connected to an FR-network interface 205.

The VPN-capable Layer-3 packet distributor 203 performs the following functions using a VPN-capable address resolution function section 206, a VPN-capable FR-network destination information administration cache table (CT) 207 and a VPN-capable ATM-network destination information administration cache table (CT) 208. The VPN-capable Layer-3 packet distributor 203 performs the following functions:
1) conversion between ATM cells and FR frames;
2) transfer between a virtual channel on the ATM network 10 and a virtual channel on the FR network connected thereto; and
3) VCC selection depending on an identification (VPN-ID) of the VPN and the destination address of a Layer-3 packet.

The VPN-capable address resolution function section 206 performs address resolution using the VPN-capable FR-network destination information administration cache table (CT) 207, the VPN-capable ATM-network administration cache table CT) 208, and a VPN database 210. More specifically, the VPN-capable address resolution function section 206 searches for the ATM address of a VPN-capable ML switch through which the Layer-3 packet is to leave the ATM network 10 based on the VPN-ID and the destination address of the Layer-3 packet. Further, the VPN-capable address resolution function section 206 performs the processing of a trigger message received from the VPN server 104.

The VPN-capable address resolution function section 206 outputs the resolved ATM address to VPN-capable VCC setup section 209. Using the resolved ATM address inputted from the VPN-capable address resolution function section 206, the VPN-capable VCC setup section 209 performs the establishment processing of a shortcut VCC for each VPN which is connected to the VPN-capable ML switch through which the Layer-3 packet is to leave the ATM network 10.

The VPN-capable ATM--network administration cache table (CT) 208 retains the VPN-ID and the destination address of the Layer-3 packet as a search key and the resolved ATM address as searched data as will be described in detail later.

The VPN-capable FR-network destination information administration cache table (CT) 207 retains the VPN-ID and the destination address of the Layer-3 packet as a search key and destination information including FR frame header and DLCI (Data Link Connection Identifier) as searched data, as will be described in detail later.

### VPN SERVER

The VPN server 104 has the following functions: 1) processing an address resolution request received from the VPN-capable ML switch for each VPN; 2) providing information to a VPN-capable ML witch for each VPN, wherein the information is required for the VPN-capable ML witch to transfer a packet received from the shortcut VCInto the FR network; 3) determining a next node to which a Layer-3 packet should be sent next depending on the VPN (routing); 4) forwarding the packet depending on the VPN (forwarding); 5) creating and retaining a routing table for each VPN; 6) retaining VPN information; 6) notifying the VPN information to a VPN-capable ML switch; and 7) instructing a VPN-capable ML switch to start address resolution processing.

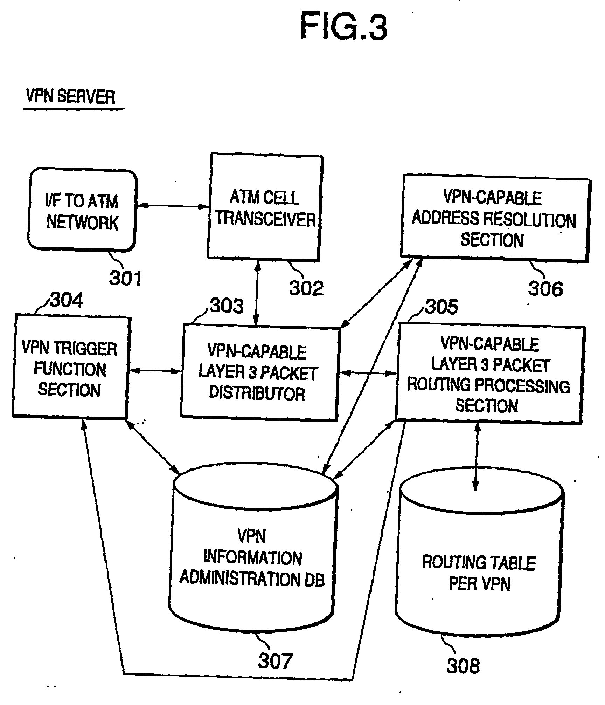

Referring to Fig. 3, the VPN server 104 is composed of an ATM-network interface 301 to the ATM network 10. The ATM-network interface 301 is connected to an ATM cell transceiver 302 which is capable of establishing a virtual channel and further transmits and receives ATM cells to and from the ATM network 10 under control of a VPN-capable Layer-3 packet distributor 303. The VPN-capable Layer-3 packet distributor 303 is further connected to a VPN trigger function section 304, a VPN-capable Layer-3 packet routing processing section 305, and a VPN-capable address resolution section 306.

The VPN-capable Layer-3 packet distributor 303 has a conversion function of converting between ATM cells and FR frames, a VCC selection function of selecting a virtual channel connection depending on the VPN-ID and the destination address of a Layer-3 packet.

The VPN trigger function section 304 has a function creating and transmitting a trigger message used for notification of VPN information and address resolution.

The VPN-capable Layer-3 packet routing processing section 305 has a function of generating routing information of a Layer-3 packet for each VPN and a function of determining a next-hop node to which a packet should be forwarded next. The routing information for each VPN is stored onto a routing table 308.

The VPN-capable address resolution function section 306 has a function of handling an address resolution request received from a VPN-capable ML switch for each VPN. The VPN-capable address resolution function section 306 further has a function of transmitting information including the FR frame header to a VPN-capable ML switch, wherein the information is required for the VPN-capable ML switch to handle a packet which has been received.

A VPN information administration database 307 stores VPN information including VPN-ID and other information, which is used by the VPN trigger function section 304, the VPN-capable Layer-3 packet routing processing section 305, and the VPN-capable address resolution function section 306.

### ATM-NETWORK DESTINATION ADMINISTRATION CT

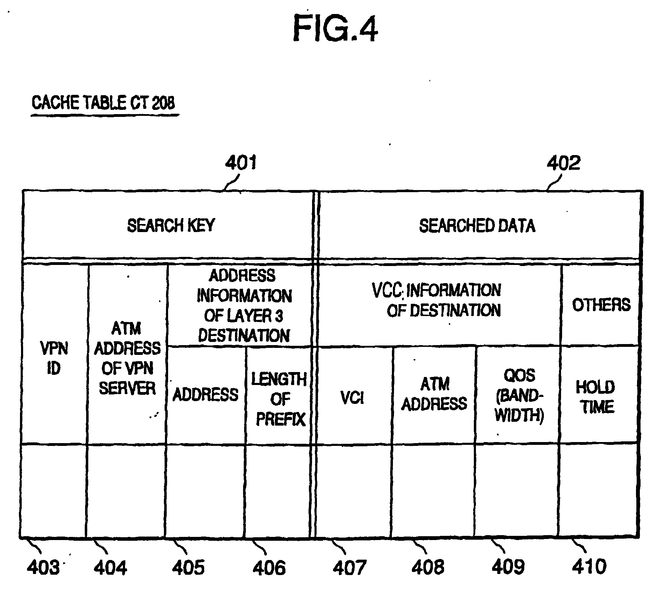

Referring to Fig. 4, the VPN-capable ATM-network administration cache table (CT) 208 consists of a search key field 401 and a searched data field 402. The search key field 401 consists of a VPN-ID field 403, a VPN server ATM address field 404, an address field 405 and a prefix length field 406 of the address information of Layer-3 destination. The searched data field 402 consists of a destination information field and another field. The VCC destination information field consists of a VCI field 407 for transmission VCC, an ATM address field 408 for the ATM address of VPN-capable ML switch connected to the transmission VCC at the opposite side, and QoS (Quality of Service) field 409 (for example, bandwidth) for the transmission VCC. The other field is a hold time field 410 for valid time period of the corresponding searched data.

### FR-NETWORK DESTINATION INFORMATION ADMINISTRATION CT

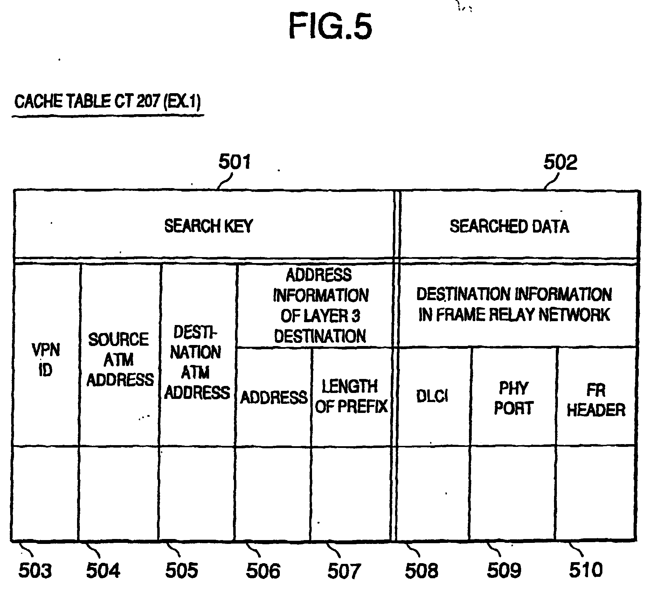

Referring to Fig. 5, the VPN-capable FR-network destination information administration cache table (CT) 207 consists of a search key field 501 and a searched data field 502. The search key field 501 consists of a VPN-ID field 503, a source ATM address field 504 regarding the shortcut VCC, a destination ATM address 505, a destination address field 506 regarding the packet received through the shortcut VCC and a prefix length field 507 regarding the address information of Layer-3 destination. The searched data field 502 consists of an FR-network destination information field consisting of a DLCI field 507 regarding FR VCIdentifier, a physical port number field 509, and FR header field 510 regarding FR header to be added to a packet.

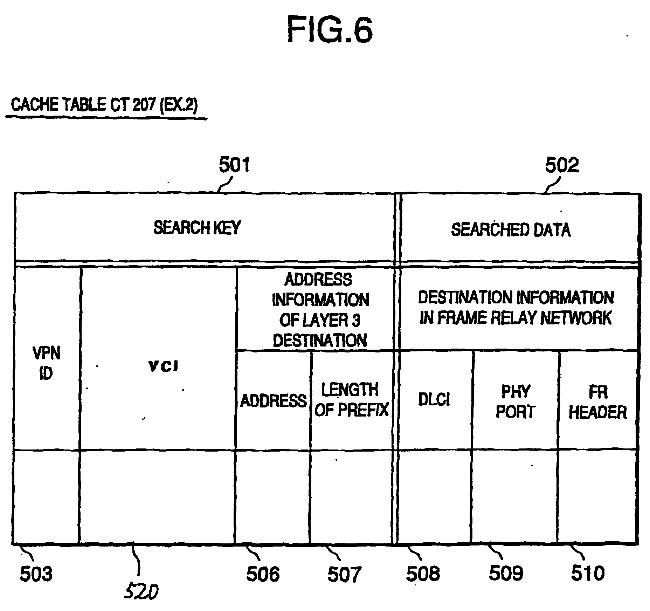

As shown in Fig. 6, a VCI field 520 may be used in place of the source ATM address field 504 and the destination ATM address 505 of Fig. 6.

### OPERATION

The system according to the present invention operates in VPN establishment phase, address resolution phase, and VPN data transfer phase. Here, an operation in the case of a plurality of VPN servers will be described.

### VPN establishment phase

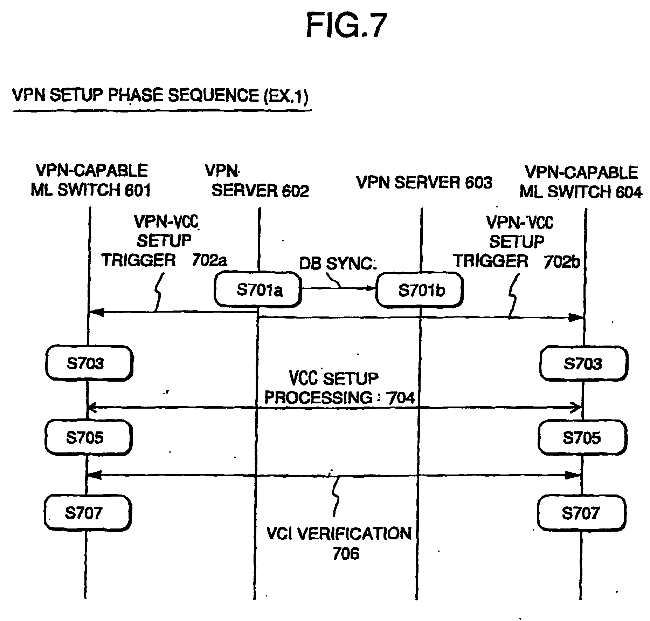

Referring to Fig. 7, the VPN server 602 stores VPN information onto the VPN information administration database 307 (step S701a). The VPN information includes the followings: a Layer-3 address of each user router participating in the virtual private network to be formed; a physical port, DLCI information, and ATM address information of a VPN-capable ML switch used by the user router: VCC information indicating how much bandwidth is needed for a certain virtual channel connection (VCC) for the VPN; and the VPN-ID.

Thereafter, the VPN server 602 sets up a VCC for the VPN to each VPN-capable ML switch participating therein. Then, a pair of the VPN-ID and the VCI of the VCC registered onto the VPN information administration database 307. This causes the VPN server 104 to determine which VPN a received packet belongs to. Alternatively, the VPN server 104 instructs each VPN-capable ML switch participating therein to transfer a packet having VPN-ID added thereto on a specific VCC. This allows the VPN server 104 to determine which VPN a received packet belongs to.

The contents of the VPN information administration database 307 are transferred to another VPN server 603 where the same database is formed (database synchronization). In the VPN server 603, as necessary, the same operation is performed (step S701b).

Further, the VPN server 104 transmits a VPN-VCC setup trigger message 702a, 702b to each VPN-capable ML switch participating therein. The VPN trigger function section 304 writes the following information to the VPN-VCC setup trigger message: the QoS information including VPN-ID and the bandwidth of a shortcut VCC for VPN; the ATM address of the VPN-capable ML switch connected by the VCC for VPN; and physical port and DLCI information of the VCC for a user router connected to the VPN-capable ML switch connected by the VCC for VPN.

The VPN-capable ML switches 601 and 604, when receiving the VPN-VCC setup trigger message 704 from the VPN server 104, start the step S703.

In the step S703, each of the VPN-capable ML switches 601 and 604 stores the VPN information conveyed in the VPN-VCC setup trigger message 704 onto the VPN database 210. Thereafter, each VPN-capable ML switch sets up a VCC having required QoS (bandwidth) to another VPN-capable ML switch which is an opposite side of the VCC to be set up (step S704). In this way, a shortcut VCC for VPN is set up.

After the shortcut VCC has been set up in the step S704, each VPN-capable ML switch performs a VCI verification step S705 by transferring the VPN-ID 706 through the setup shortcut VCC. When receiving the VPN-ID from the opposite side, each VPN-capable ML switch stores the received VPN-ID as well as the VCI through which the notice is transferred onto the VPN database 210 (step S707). In this manner, the VPN has been established.

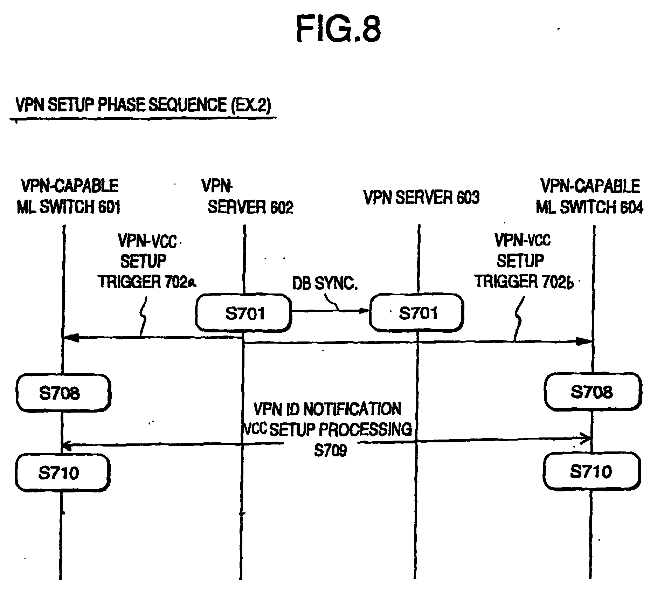

As shown in Fig. 8, another alternative may be employed in the case where the VPN-ID can be transferred by the signaling processing which is used to get up the VCC. More specifically, a VPN-ID notification VCC setup processing step S708 using the signaling (709) in place of the steps S703 of Fig. 7. Thereafter, the VPN-ID obtained by the signaling is stored onto the VPN database 210 (step S710). In this manner, the VPN establishment phase may be performed.

After the VPN establishment phase has been completed, each user router exchanges a routing protocol packet used in routing protocol with the VPN server 104. The VPN-capable Layer-3 packet routing processing section 305 of the VPN server 104 computes routes for each VPN to produce the routing table 308 per VPN.

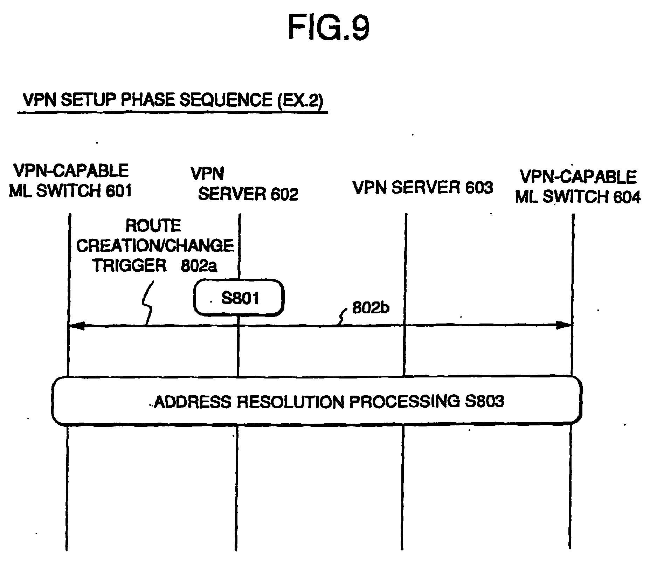

Referring to Fig. 9, after the routing table 308 has been produced, the VPN server 104 transmits a route creation/change trigger to each VPN-capable ML switch (step S801). The route creation/change trigger conveys an address and a prefix length of Layer-3 destination. Here, the VPN server 602 transmits a route creation/change triggers 802a and 802b to the VPN-capable ML switches 601 and 604, respectively. Thereafter, the address resolution processing (S803) will be started.

### Address resolution phase

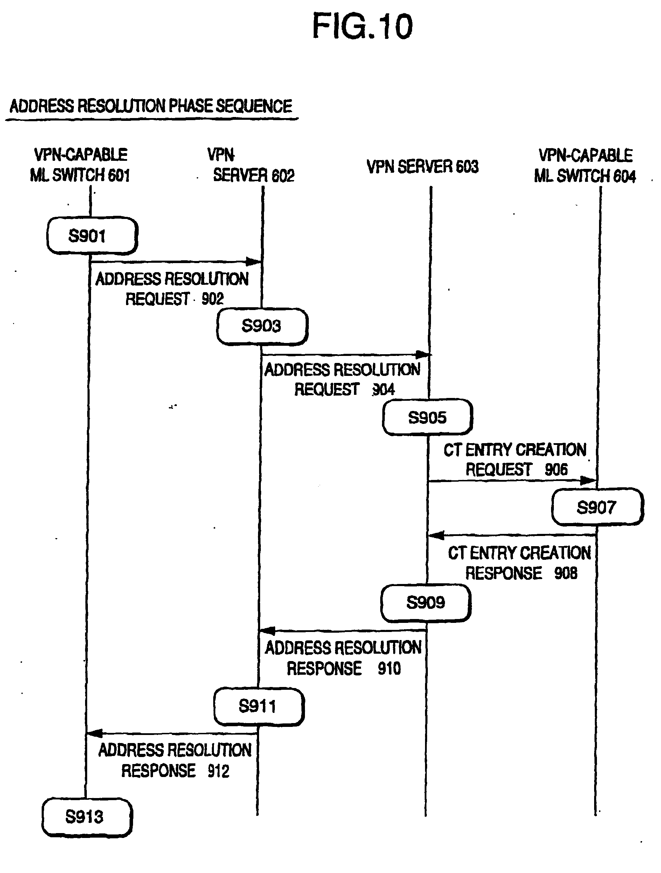

Referring to Fig. 10, in the step S901, the VPN-capable ML switch 601 produces an entry which is composed of the address and the prefix length of Layer-3 destination conveyed in the route creation/change trigger and is further composed of the ATM address of the VPN server 602 which has transmitted the trigger thereto and the VPN-ID. Then, the entry is stored as a key onto the VPN-capable ATM-network administration cache table (CT) 208. Thereafter, the VPN-capable ML switch 601 outputs a notice including the address and the prefix length of Layer-3 destination and VPN-ID to the VPN-capable address resolution function section 206. When receiving the notice, the VPN-capable address resolution function section 206 produces an address resolution request message 902 and outputs it to the VPN server 602.

When receiving the address resolution request message 902 from the VPN-capable ML switch 601, the VPN server 602 performs the step S903. In the step S903, the VPN-ID is extracted from the received request message 902 and the VPN-capable Layer-3 packet routing processing section 305 and the routing table 308 are used to determine the next hop node address to which the message 902 should be sent next. The next hop node address, the VPN-ID, and the request message 902 are transferred to the VPN-capable address resolution section 306. The VPN-capable address resolution section 306 determines whether the next hop node is a VPN server or a user router to be connected via a VPN-capable ML switch. Here, the next hop node is the VPN server 603. Therefore, the address resolution request message 904 is transferred to the VPN server 603.

When receiving the address resolution request message 904 fro the VPN server 602, the VPN server 603 performs the step S905. In the step S905, the VPN server 603 determines the next hop node destination to which the received reguest message 904 should be forwarded next in the VPN. Here, since the next hop node is a user router to be connected via the VPN-capable ML switch 604, the VPN server 603 performs the transmission processing of a CT entry creation reguest message 906.

In the transmission processing of the CT entry creation request message 906, the CT entry creation request message 906 is produced by using the VPN-capable address resolution section 306 to add the Layer-2 packet header information attached in the VPN-capable Layer-3 packet distributor 303 to the address resolution request message 904. Then, the CT entry creation request message 906 is transmitted to the VPN-capable ML switch 604, which is a transit node.

When receiving the address resolution request message 906 from the VPN server 603, the VPN-capable ML switch server 604 performs the step S907. In the step S907, the ATM cell transceiver 202 transfers the received message 906 to the VPN-capable Layer-3 packet distributor 203 Since it is a CT entry creation request message, it is transferred to the VPN-capable address resolution function section 206.

The VPN-capable address resolution function section 206 produces an entry which is composed of the address, the prefix length, and the source ATM address conveyed in the CT entry creation request message and the ATM address of the self node. Then, the entry is stored as a key onto the VPN-capable FR-network administration cache table (CT) 207. Further, the VPN-capable address resolution function section 206 writes information onto the DLCI field 508, the physical port field 509 and the FR header field 510 based on the Layer-2 packet header information conveyed in the CT entry creation request message 906.

Thereafter, the VPN-capable ML switch server 604 produces a CT entry creation response message 908 by adding the ATM address of its own as the destination ATM address to the CT entry creation request message 906. The CT entry creation response message 908 is transmitted to the VPN server 603.

When receiving the CT entry creation response message 908, the VPN server 603 performs the step S909. In the step S909, the VPN-ID, the address and the prefix length of the Layer-3 destination, and the destination ATM address are extracted from the CT entry creation response message 908 and they are written onto an address resolution response message 910, which is transmitted to the VPN server 602.

When receiving the address resolution response message 910, the VPN server 602 performs the stop S911 where the received address resolution response message 910 is transferred as an address resolution response message 912 to the VPN-capable ML switch 601.

When receiving the address resolution response message 912, the VPN-capable ML switch 601 performs the step S913. In the step S913, the VPN database 210 is searched for VCC information for the VPN using as a key the destination ATM address and the VPN-ID conveyed in the address resolution response message 912. The obtained VCC information is stored onto the destination VCC information field of the entry produced by the step S901 in the VPN-capable ATM-network administration cache table (CT) 208 (see Fig. 4).

The hold time of the entry is usually infinite. In the case where the contents of entries are checked at regular intervals, the check time interval is stored onto the bold time field.

In the above manner, the address resolution phase is completed and data transfer is allowed over the VPN, that is, the VPN data transfer phase is started.

### Data transfer phase

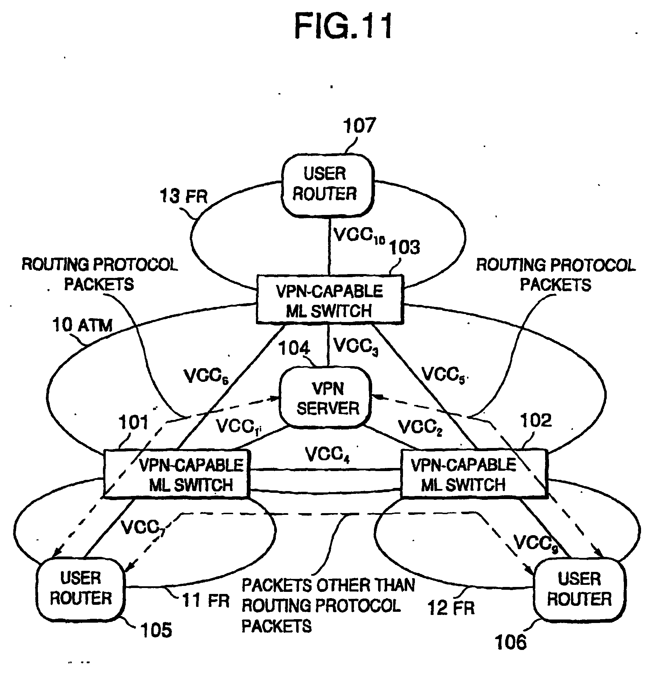

Referring to Fig. 11, at a VPN-capable ML switch, a VCC for each VPN or VPN-ID is added to a routing protocol packet and the routing protocol packet is transmitted through a specific VCC to the VPC server 104 In the VPC server 104, the routing protocol packet is used to produce the per-VPN routing table 308.

In the case of a packet other than a routing protocol packet, it is determined to which VPN the received packet belongs using the VPN database 210 based on the physical port and DLCI of the FR-network VCC through which the VPN-capable ML switch received the packet. After the VPN-ID is obtained and the Layer-2 header is removed, the VPN-capable ATM-network administration cache table (CT) 208 is searched using the VPN-ID and the destination address of Layer 3 as a key. If an entry is found, a shortcut VCC is specified by the VCI obtained by the found entry. The shortcut VCC is used to transfer the packet to another VPN-capable ML switch which is an opposite side of the shortcut VCC.

When receiving the packet through the shortcut VCC, the VPN-capable ML searches the VPN database 210 for VPN-ID using the VCI of the shortcut VCC as a key. Thereafter, the VPN-capable FR-network destination information administration CT 207 is searched using the found VPN-ID, the source ATM address, the self ATM address, and the destination address of the received packet. If an entry is found in the VPN-capable FR-network destination information administration CT 207, the found entry has FR header information which is to be added to the received packet. Based on the header information, an FR frame is formed and is transmitted to the DLCI of the physical port obtained by the found entry. In this way, the data transfer phase is completed.

In the VPN data transfer phase, the VPN server monitors the contents of a routing table for each VPN. When a change in the touring table for a VPN is detected, the VPN server transmits a route creation/change trigger to all the VPN-capable ML switches associated with the VPN that has changed in the routing table. The VPN-capable ML switches which have received the route creation/change trigger starts the address resolution phase as described in Fig. 9. In this way, the VPN-capable FR-network destination information administration CT 207 and the VPN-capable ATM-network destination information administration CT 208 which are associated with each shortcut VCC are updated depending on the changed routing table.

### VPN-CAPABLE MPOA SYSTEM

The present invention may be applied to the MPOA system as described before, which has a network configuration similar to that of Fig. 1. More specifically, a VPN-capable MPOA server and a VPN-capable MPOA ML switch are provided in place of the VPN server 104 and the VPN-capable ML switch, respectively.

The MPOA server has the VPN information administration database 307 (see Fig. 3) added thereto. Further, the processing of the Layer-3 packet distributor, MPOA trigger function section, Layer-3 packet routing processor and routing table is changed such that it is performed for each VPN which has been set in the VPN information administration database 307. Further, the MPOS trigger function section has an additional function of notifying each MPOA ML switch registered in the VPN information administration database 307 of information indicating between which MPOA ML switches registered in the VPN information administration database 307 a VCC for the VPN is set up, the quality information required for the VCC for the VPN, VPN-ID, and the like. The above-mentioned addition allows the MPOA server to perform the same functions as the VPN server used in the embodiment as described above.

The VPN-capable MPOA ML switch may be formed based on the conventional MPOA ML switch as described before. More specifically, the VPN-ID field as a search key is added to an MPOA ATM-network destination information administration cache table. Such a VPN-capable MPOA ATM-network destination information administration cache table can operate in the same manner as the VPN-capable ATM-network destination information administration cache table (CT) 208.

Similarly, the VPN-ID field as a search key and the QoS field as the destination VCC information are added to an MPOA FR-network destination information administration cache table. Such a VPN-capable MPOA FR-network destination information administration cache table can operate in the same manner as the VPN-capable FR-network destination information administration cache table (CT) 207. Further, the MPOA VCC setup section is changed to the VPN-capable VCC setup section 209 which is capable of receiving a notice of VPN information from the MPOA server and further of setting VCC for each VPN. Furthermore, the VPN database 210 is added. Such a configuration allows the MPOA ML switch to retain VPN information.

The MPOA address resolution function section has the following functions added thereto: 1) transmitting an address resolution request having the VPN-ID attached thereto based on the retained VPN information; and 2) retaining the destination ATM address information and the FR network destination information obtained by the address resolution request for each VPN onto the MPOA FR-network destination information administration cache table and the MPOA ATM-network destination information administration cache table which have had the VPN-ID field added thereto. Further, there are added a function of transferring a packet to the shortcut VCC for VPN stored in the MPOA ATM-network destination information administration cache table depending on the VPN-ID corresponding to the FR link used by the user route, which has been obtained by searching the VPN database 210 and a function of transferring it to the FR network by searching the MPOA ATM-network destination information administration cache table using the VPN-ID corresponding to the shortcut VCC for the VPN through which a packet has been received, wherein the VPN-ID is obtained by searching the VPN database 210. The above-mentioned addition allows the MPOA ML switch to perform the same functions as the VPN-capable ML switch used in the embodiment as described above.

## Claims

1. A network system composed of an ATM network (10) and a plurality of frame relay networks (11-13) each including at least one user router (105-107), wherein at least one virtual private network (VPN) is set up over the network system, characterized by:
a VPN server (104) provided in the ATM network; and
a plurality of VPN-capable edge devices (101-103) each connecting the ATM network to one of the frame relay networks,
wherein a first VPN-capable edge device transfers a packet to a second VPN-capable edge device through a virtual channel connection (VCC) of the VPN, wherein the packet is received from a user router belonging to the VPN and the virtual channel connection is determined depending on a layer-3 destination address of the packet and a VPN identifier assigned to the VPN.

2. The network system according to claim 1, wherein the VPN server comprises:
a VPN administration database (307) retrievably storing VPN information including the VPN identifier and quality of service (QoS) information required for the VPN;
a routing table (308) for each VPN; and
a server controller (302-305) for handling packets received from and transmitted to a VPN-capable edge device for each VPN, and
each of the VPN-capable edge devices comprises:
a VPN database (210) retrievably storing the VPN information received from the VPN server:
a VCC setup controller (209) for setting up the virtual channel connection directly connecting the first and second VPN-capable edge devices for each VPN based on the VPN information;
an administration database (207, 208) retrievably storing next-hop destination information to the frame relay network and the ATM network for each VPN; and
a switch controller (202-204) for handling packets received from and transmitted to the frame relay network and the ATM network by referring to the administration database.

3. The network system according to claim 2, wherein the VCC setup controller sets up the virtual channel connection meeting the QoS information included in the VPN information.

4. The network system according to claim 2 or 3, wherein the VPN server further comprises:
a first address resolution processor (306) for processing an address resolution request received from a VPN-capable edge device for each VPN using the VPN administration database, and
the VPN-capable edge device further comprises:
a second address resolution processor (206) for performing address resolution from the layer-3 destination address to an ATM address for each VPN to update the administration database.

5. A method for forming a virtual private network (VPN) over a network system composed of an ATM network and a plurality of frame relay networks each including at least one user router, wherein a plurality of edge devices connect the ATM network to the frame relay networks, respectively, characterized by the steps of:
at a VPN server provided in the ATM network,
inputting VPN information including the VPN identifier and quality of service (QoS) information required for the VPN;
storing setup information of a virtual channel connection for each VPN; and
transmitting the setup information to first and second edge devices associated with the virtual channel connection, and
at each of the first and second edge devices,
storing the setup information received from the VPN server;
setting up the virtual channel connection directly connecting the first and second VPN-capable edge devices based on the setup information; and
retrievably storing next-hop destination information to the frame relay network and the ATM network for each VPN onto an administration database.

6. The method according to claim 5, wherein the virtual channel connection is set up to meet the QoS information included in the setup information.

7. The method according to claim 5, wherein the first edge device queries the second edge device for address resolution through the VPN server, and then updates the administration database based on a response to the query of the address resolution.

8. A network system composed of an ATM network (10) and a plurality of frame relay networks (11-13), including a virtual private network (VPN) server and a plurality of VPN-capable switches, characterized in that
the VPN server (104) includes:
means for transmitting a user router forming the VPN and an VPN identifier of the VPN to each of the edge switches; and
means for producing a routing table for each VPN, and each of the VPN-capable switches (101-103) includes:
means for setting up a virtual channel connection (VCC) between VPN-capable switches for each VPN;
means for storing packet information to be transmitted to the virtual channel connection set up between the VPN-capable switches for each VPN;
means for storing header information to be attached to a packet received from the virtual channel connection set up between the VPN-capable switches for each VPN and transmission destination information to which the packet should be transmitted; and
means for acquiring packet information to be transmitted to the virtual channel connection set up between the VPN-capable switches for each VPN, header information to be attached to the packet received from the virtual channel connection set up between the edge switches for each VPN and transmission destination information to which the packet should be transmitted,
wherein the routing information between user routes is exchanged for each VPN.

9. A network system composed of an ATM network and a plurality of frame relay networks, including an MPOA (Multiprotocol Over ATM) server and a plurality of MPOA clients, characterized in that
the MPOA server includes:
means for exchanging routing information for each virtual private network (VPN);
means for producing a routing table for each VPN;
means for processing address resolution for each VPN; and
means for transmitting a trigger message to an MPOA client, the trigger message including a field of a user router belonging to the VPN and a field of a VPN identifier, and
the MPOA client includes:
means for setting up a virtual channel connection (VCC) between MPOA clients for each VPN using the VPN identifier;
means for storing packet information to be transmitted to the virtual channel connection set up between the MPOA clients for each VPN; and
means for adding the VPN identifier to an MPOA cache table and storing header information to be attached to a packet received from the virtual channel connection set up between the MPOA clients for each VPN and transmission destination information to which the packet should be transmitted.

10. A network system composed of an ATM network and a plurality of frame relay networks, including an MPOA (Multiprotocol Over ATM) server and a plurality of MPOA clients, characterized in that
the MPOA server includes:
means for exchanging routing information for each virtual private network (VPN);
means for producing a routing table for each VPN:
means for processing address resolution for each VPN; and
means for transmitting a trigger message to an MPOA client, the trigger message including fields of a user router belonging to the VPN, a VPN identifier, and quality information of a virtual channel connection (VCC) set up between the MPOA clients, and
the MPOA client includes:
means for setting up a virtual channel connection (VCC) having required quality between MPOA clients for each VPN using the VPN identifier when receiving the trigger massage:
means for storing packet information to be transmitted to the virtual channel connection set up between the MPOA clients for each VPN; and
means for adding the VPN identifier to an MPOA cache table and storing header information to be attached to a packet received from the virtual channel connection set up between the MPOA clients for each VPN and transmission destination information to which the packet should be transmitted.
